# EUROPÄISCHE PATENTSCHRIFT

(11) **EP 1 443 455 B1**
(45) Veröffentlichungstag und Bekanntmachung des Hinweises auf die Patenterteilung: **02.08.2006**
(21) Anmeldenummer: 03025837.0
(22) Anmeldetag: 11.11.2003
(51) Int. Cl.: G06K 19/077

(54) **Dünne elektronische Chipkarte**
Thin electronic chip card
Carte à puce électronique mince

(30) Priorität: 31.01.2003 DE 10304824
(43) Veröffentlichungstag der Anmeldung: 04.08.2004
(73) Patentinhaber: VARTA Microbattery GmbH, 30419 Hannover (DE)
(72) Erfinder: Fürst, Stefan, 73492 Rainau (DE); Rathmann, Claudia, 73479 Ellwangen (DE); Bosch, Ulrich, 86720 Nördlingen (DE); Moser, Michael, Rainau (DE); Birke-Salam, Fatima, Dr., 73479 Ellwangen (DE); Woehrle, Thomas, Dr., 73479 Ellwangen (DE); Stelzig, Heinrich, 73479 Ellwangen (DE); Ilic, Dejan, Dr., 73479 Ellwangen (DE)
(74) Vertreter: Patentanwälte Ruff, Wilhelm, Beier, Dauster & Partner

(56) Entgegenhaltungen:
- EP-A- 0 764 691
- WO-A-01/97300
- DE-A- 10 102 125
- DE-A- 19 645 071
- US-A- 5 558 957
- US-A1- 2002 007 906
- US-A1- 2002 047 049
- HAGHIRI, TARANTINO: "VOM PLASTIK ZUR CHIPKARTE" 1999, CARL HANSER VERLAG , MÜNCHEN , XP002282743 * Seite 97, Zeile 11 - Zeile 22 *

## Beschreibung

Gegenstand der Erfindung ist eine dünne elektronische Chipkarte mit einem IC-Chip und einem galvanischen Element als Energiespeicher, welches mindestens eine lithiuminterkalierende Elektrode besitzt und ein dünnes, flexibles Gehäuse aus zwei Metallfolien, die direkt an den Elektroden anliegen und die miteinander über eine Klebe- oder Siegelschicht dicht verbunden sind, aufweist.

Als Energiespeicher in "Active Smart Cards" sind extrem dünne, flexible galvanische Elemente mit einer Gesamtdicke von beispielsweise weniger als 0,5 mm erforderlich, wie sie z.B. in der US-A-5,558,957 beschrieben sind. Bei solchen dünnen elektronischen Chipkarten ist der flache Energiespeicher zur Stromversorgung des IC-Chips oder anderer Bauelemente wie integrierter Miniatursensoren oder Transponder vorgesehen. Die Herstellung dinner, elektronischer Chipkarten mit integrierten elektronischen und/oder elektronischen Bauteilen ist z.B. in der DE 196 45 071 beschrieben.
Eine derartige Smart - Card muss in ihrer Gesamteigenschaft bestehend aus Kartenkörper, Bauelementen und Energiespeicher ISO-konform nach ISO - Biegetest DIN - ISO7816 - 1 und DIN ISO / IEC 10'373 sein, d.h. der ISO Biegetest nach DIN - ISO 7816-1 und die Prüfvorschrift nach DIN ISO/IEC 10'373 muss erfüllt werden. Beim dynamischen Biegetest wird die Karte mit einer Frequenz von 30 Biegungen pro Minute (= 0,5 Hz) 2 cm in der Länge bzw. 1 cm in der Breite gewölbt. Eine Karte muss bei diesem Test mindestens 250 Biegungen in jede der vier möglichen Richtungen (insgesamt also 1000 Biegungen) ohne Schäden überstehen. Beim dynamischen Torsionstest wird die Karte ± 15° um die Längsachse mit einer Frequenz von 30 Biegungen pro Minute (=0,5 Hz) belastet. Der Standard verlangt 1000 Torsionen, ohne dass die Chipfunktionalität ausfällt oder mechanische Schäden an der Karte sichtbar werden.

Bei den bisher eingesetzten Heiss- und Kaltlaminationsverfahren wurde das Metallgehäuse des Elements häufig beschädigt, so dass das Gesamtsystem Karte unbrauchbar wurde. Wenn das Gehäuse mit bekannten Klebern, wie beispielsweise gängige zweikomponentige Polyurethanklebstoffe durch Kaltlamination in die Chipkarte eingebracht wurde, traten häufig Risse bei der Durchführung der ISO - Biegetests auf.

Das Dokument EP 0 997 959 B1 beschreibt galvanische Elemente mit einem nichtwässrigen Elektrolyten, die Gehäuse aus Laminatfilmen besitzen. Derartige Laminate bestehen in der Regel aus einer doppelseitig beschichteten Aluminiumverbundfolie, die sich leicht bis zu 5 mm tiefziehen lässt und den ISO-Test aufgrund dieser Eigenschaft sofort beseht. Die Kunststoffummantelung verhindert dabei ein Einreißen.

In der Patentanmeldung DE 101 02 125.9 ist die mechanische Verstärkung einer elektronischen Chip-Karte mit darin angeordnetem galvanischen Element mittels einer aus Metall oder faserverstärktem Kunststoff bestehenden Teil-/ oder Ganzüberdeckung beschrieben.

Eine weitere Möglichkeit zur Stabilisierung des Metallgehäuses ist in der deutschen Patentanmeldung 102 26 848.7 vorgeschlagen. Dabei ist bei einem galvanischen Element mit mindestens einer lithiuminterkalierenden Elektrode und einem dünnen, flexiblen Gehäuse aus zwei Metallfolien, die direkt an den Elektroden anliegen und die miteinander über eine Klebe- oder Siegelschicht dicht verbunden sind, mindestens eine der Metallfolien auf der Außenseite mit einer die Stabilität und Festigkeit erhöhenden Kunststoffschicht versehen und zwischen Metallfolie und Kunststoffschicht ist eine Adhäsionsschicht angeordnet.
Ein solches galvanisches Element muss jedoch in weiteren Verfahrenschritten in einen Folienverbund überführt werden.

Der Erfindung liegt insbesondere die Aufgabe zugrunde, eine aktive Chipkarte anzugeben, welche die hohen Anforderungen an mechanische Stabilität gegenüber Biegebeanspruchungen und Torsionsbeanspruchungen erfüllt und welche einfach herstellbar ist und aus nur wenigen Schichten aufgebaut ist.

Diese Aufgabe wird bei einer Chipkarte der eingangs genannten Gattung durch die kennzeichnenden Merkmale des Anspruchs 1 gelöst. Den Unteransprüchen sind vorteilhafte Ausgestaltungen der Erfindung zu entnehmen.

Erfindungsgemäß erfolgt die Einlamination eines galvanischen Elements mit mindestens einer lithiuminterkalierenden Elektrode und einem dünnen, flexiblen Gehäuse aus zwei Metallfolien, die direkt an den Elektroden anliegen und die miteinander über eine Klebe- oder Siegelschicht dicht verbunden sind, in eine Smartcard bei Umgebungstemperatur mittels eines elastischen Klebers. Eine Smartcard oder Chipkarte ist dabei ein mehrlagiger, biegsamer Kunststoffverbund, der Funktionen, wie beispielsweise Sensorik, Datenspeicherung und -abruf aufweist.

Das galvanische Element ist in einer Ausnehmung der Chipkarte angeordnet und Chipkarte und Element sind beidseitig durch eine Overlay-Kunststofffolie abgedeckt, die mit Chipkarte und Element über einen elastischen spannungsausgleichenden Kleber, der gleichzeitig auf Metallen und Kunststoffen haftet, fest verbunden ist. Die Overlay-Kunststofffolien sind durch Kaltlamination aufgebracht.

Bei der Heisslamination werden durch Druck und gleichzeitiger Einwirkung von höheren Temperaturen (typischerweise mehr als 100°C) Kunststoff-Schichten flächig miteinander an der Oberfläche verschmolzen; dabei haften die Flächen bleibend aneinander und es entsteht ein Verbund aus den eingesetzten Kunststoff-Folien. Eine energiesparende Alternative zu der Heisslamination ist die sogenannte Kaltlamination. Wie bei der Heisslamination wird Druck auf die übereinandergelagerten Folien ausgeübt; jedoch erfolgt das Vereinigen der zu verklebenden Flächen bei Umgebungstemperatur (Raumtemperatur) oder bei Wärme-Temperaturen bis 50°C. Ein erfindungsgemäßer einkomponentiger Kleber ist eine fließfähige, zähflüssige Masse, die das galvanische Element verkapselt, in die Smart-Card einbettet und nach dem Polymerisieren (Aushärten) eine bleibende Flächenhaftung zu den Kartenfolien und der metallischen Gehäuse-Oberfläche des galvanischen Elements bewirkt.

Der Kleber sollte eine Glasübergangstemperatur zwischen 35° C und 70° C und eine Reißdehnung von 40 - 52 % nach DIN ISO 527 besitzen und lichtaushärtend sein. Insbesondere ist der Kleber ein Epoxidharz oder ein thermoplastisches Polyurethan-basiertes Material.

Die Overlay-Kunststofffolie besteht vorzugsweise aus PVC. Alle Flächenhaftungen in der Karte -Overlay- zur Kernfolie, metallische Oberfläche des Gehäuses zur Overlay-Folie und metallisches Gehäuse zur Kernfolie - sind durch Kaltlamination hergestellt.

Durch die erfindungsgemäße Verwendung eines elastischen, also spannungsausgleichenden Klebers verbunden mit einer Aushärtung, die bei Raumtemperatur stattfindet, kann das Gesamtsystem Smartcard - Kleber - Flachzelle in ein mechanisch stabiles System überführt werden, welches insgesamt auf eine hohe Belastbarkeit während den ISO - Biegetests abgestimmt ist.

Bei der Durchführung der Versuche mit anderen, in der Regel spröderen Klebstoffen, ergab sich eine Ausschußquote von 20 % - 100 %. Bei der Verwendung eines spannungsausgleichenden, lichtakivierbaren Epoxidharzes mit einer Reißdehnung von ca. 40 % - 52 % nach DIN EN ISO 527 und einer Glasübergangstemperatur von 45° - 49° C trat keine Beschädigung des galvanischen Elements bzw. der Batterie oder der Karte auf.

Die Glastemperatur bzw. Glasübergangstemperatur (T_{g}) ist die Temperatur, bei der amorphe oder teilkristalline Polymere vom gummielastischen oder flüssigen Zustand in einen hartelastischen oder glasigen Zustand übergehen oder umgekehrt. Das Phänomen begründet sich auf das Einfrieren oder Auftauen der Brownschen Molekularbewegung längerer Kettensegmente des Polymerknäules. Wird die Glastemperatur erreicht, werden die physikalischen Eigenschaften stark verändert. Beispiele dafür sind die Viskosität oder die Härte.
Besonders vorteilhaft ist für die Eigenschaft im Biegetest die Tatsache, dass die erfindungsgemäß vorzugsweise verwendeten Epoxidharze, die vorteilhafte Eigenschaften bei den Tests zeigten, eine verhältnismäßig niedere Glastemperatur besitzen, die bei ungefähr 50° C liegt. Somit sind diese gehärteten Epoxidharze elastischer als diejenigen, die eine Glastemperatur von beispielsweise 140° C aufweisen und somit spröde sind und beim ISO-Biegetest Risse bekommen.
Epoxidharze sind organische, zumeist oligomere Verbindungen, die insbesondere eine Epoxid-Gruppe besitzen und durch PolymerisationsVerfahren in sogenannte Duroplaste überführt werden können ("Härten"). Der Schwund beim Härteprozess ist gering, die gehärteten Produkte sind spannungsfrei und reissfest, was von grossem Vorteil für den Biegetest ist. Ferner haften bzw. kleben diese Epoxidharze an metallischen Oberflächen, wie zum Beispiel Kupfer und führen ein für sich betrachtetes mechanisch instabiles, dünnes Kupfer in einen elastischen und stabilen Gesamtverbund Epoxidharz mit Kupfer über.

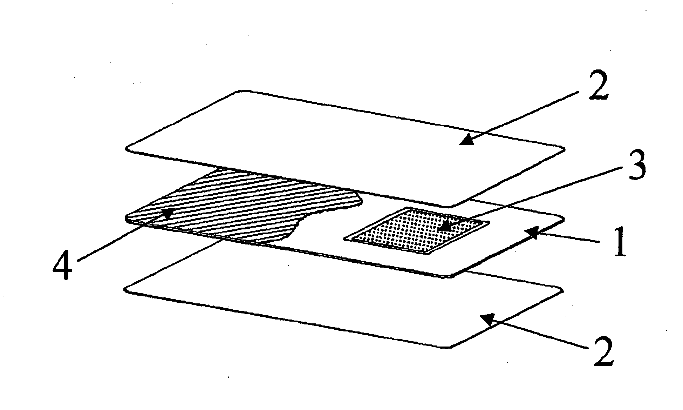

Eine erfindungsgemäße dünne elektronische Chipkarte mit einem IC-Chip und einem galvanischen Element als Energiespeicher ist schematisch in der Figur dargestellt.

Als Kartenmaterial dient eine Kernfolie 1 aus PVC/ABS-Blend (Dabei sind PVC Polyvinylchlorid, ABS Acrylnitril-Butadien-Styrol-Copolymer), die in einer Aussparung ein galvanisches Element 3 enthält. Die Overlay-Folie 2 besteht aus PVC.
Ein vorteilhafter Kleber 4 ist ein modifiziertes ein-komponentiges Epoxidharz (beispielsweise das Produkt Katiobond® der Firma DELO, Deutschland). Das Aushärten erfolgt durch Lichtaktivieren mit sichtbarem Licht. Eine herausragende Eigenschaft, die für die Anwendung von galvanischen Elementen mit Kupfergehäuse in der Smartcard von Bedeutung ist, ist die hervorragende Verklebung an metallischen Oberflächen. Die Endfestigkeit wird nach 24 h erreicht.
Epoxidharze haben gute chemische Beständigkeit und sind physiologisch unbedenklich. Diese speziellen Epoxidharze weisen einen geringen Schwund beim Härtungsprozess auf und nach dem Härten entstehen spannungsfreie und reißfeste Kunststoffe; dies ergibt einen erheblichen Vorteil beim Biegetest.

Als alternativer erfindungsgemäßer Kleber kann ein thermoplastischer Polyurethan-basierter Klebstoff, beispielsweise Henkel TPU QR 4663, mit Erfolg verwendet werden.

Zur Herstellung der dünnen elektronischen Chipkarte wird die Kernfolie 1 ausgestanzt, damit das galvanische Element 3 eingelegt werden kann. Dann wird eine dosierte Klebermenge durch ein Rakel vollflächig auf der Kernfolie 1 ausgestrichen; dabei fließt der Kleber 4 auch in einen Hohlraum zwischen Kernfolie 1 und dem galvanischen Element 3. Danach wird die Overlay-Folie 2 aufgelegt, diese Vorstufe für die laminierte Karte gewendet, der Rakelvorgang wiederholt und die zweite Overlay-Folie 2 aufgelegt. Nach dem Verpressen der Karte (ohne Wärmeeinbringung) wird diese belichtet, um den Aushärtevorgang zu initiieren.

## Patentansprüche

1. Dünne elektronische Chipkarte mit einem IC-Chip und einem galvanischen Element (3) als Energiespeicher, welches mindestens eine lithiuminterkalierende Elektrode besitzt und ein dünnes, flexibles Gehäuse aus zwei Metallfolien, die direkt an den Elektroden anliegen und die miteinander über eine Klebe- oder Siegelschicht dicht verbunden sind, aufweist, und das in einer Ausnehmung der Chipkarte angeordnet ist, wobei das galvanische Element in einer Ausnehmung einer Kernfolie (1) angeordnet ist und die Kernfolie und das Element (3) beidseitig durch eine Overlay-Kunststoffolie (2) abgedeckt sind, **dadurch gekennzeichnet, dass** die Overlay-Kunststoffolie (2) mit Kernfolie (1) und Element (3) über einen elastischen spannungsausgleichenden Kleber (4) der gleichzeitig auf Metallen und Kunststoffen haftet, fest verbunden ist, wobei der Kleber (4) eine Glasübergangstemperatur zwischen 35° C und 70° C und eine Reißdehnung von 40 - 52 % nach DIN ISO 527 besitzt.

2. Dünne elektronische Chipkarte nach Anspruch 1, **dadurch gekennzeichnet, dass** alle Flächenhaftungen in der Chipkarte nämlich Overlay-Folie (2) zur Kernfolie (1), Oberfläche des metallischen Gehäuses zur Overlay-Folie und metallisches Gehäuse zur Kernfolie, durch Kaltlamination hergestellt sind.

3. Dünne elektronische Chipkarte nach nach Anspruch 1 oder 2, **dadurch gekennzeichnet, dass** der Kleber (4) lichtaushärtend ist.

4. Dünne elektronische Chipkarte nach einem der Ansprüche 1-3, **dadurch gekennzeichnet, dass** der Kleber (4) ein Epoxidharz ist.

5. Dünne elektronische Chipkarte nach einem der Ansprüche 1-3, **dadurch gekennzeichnet, dass** der Kleber (4) ein thermoplastisches Polyurethan-basiertes Material ist.

6. Dünne elektronische Chipkarte nach einem der Ansprüche 1-5, **dadurch gekennzeichnet, dass** die Overlay-Kunststoffolie (2) aus PVC besteht.

## Claims

1. Thin electronic chip card with an IC chip and a galvanic element (3) as an energy store, which has at least one lithium-intercalating electrode and has a thin, flexible housing comprising two metal foils, which bear directly against the electrodes and are connected to each other in a sealed manner by means of an adhesive or sealing layer, and the element is arranged in a recess in the chip card, the galvanic element being arranged in a recess in a core film (1) and the core film and the element (3) being covered on both sides by an overlay plastic film (2), **characterized in that** the overlay plastic film (2) is firmly bonded to the core film (1) and the element (3) by means of an elastic stress-compensating adhesive (4), which adheres simultaneously on metals and plastics, the adhesive (4) having a glass transition temperature of between 35°C and 70°C and an elongation at break of 40 - 52% in accordance with DIN ISO 527.

2. Thin electronic chip card according to Claim 1, **characterized in that** all the area adhesive bonds in the chip card, namely the overlay film (2) to the core film (1), the surface of the metallic housing to the overlay film and the metallic housing to the core film, are produced by cold lamination.

3. Thin electronic chip card according to Claim 1 or 2, **characterized in that** the adhesive (4) is light-curing.

4. Thin electronic chip card according to one of Claims 1-3, **characterized in that** the adhesive (4) is an epoxy resin.

5. Thin electronic chip card according to one of Claims 1-3, **characterized in that** the adhesive (4) is a thermoplastic polyurethane-based material.

6. Thin electronic chip card according to one of Claims 1-5, **characterized in that** the overlay plastic film (2) consists of PVC.

## Revendications

1. Mince carte à puce électronique dotée d'une puce à circuit intégré et d'un élément galvanique (3) qui sert d'accumulateur d'énergie, qui présente au moins une électrode intercalaire en lithium et un mince boîtier flexible constitué de deux feuilles métalliques qui reposent directement sur les électrodes et reliées de manière étanche l'une à l'autre par une couche d'adhésif ou de scellement et disposé dans une découpe de la carte à puce, l'élément galvanique étant disposé dans une découpe d'une feuille d'âme (1), la feuille d'âme et l'élément (3) étant recouverts sur leurs deux faces par une feuille de recouvrement (2) en matière synthétique, **caractérisée en ce que** la feuille de recouvrement (2) en matière synthétique, la feuille d'âme (1) et l'élément (3) sont reliés solidairement par un adhésif (4) élastique de répartition des contraintes qui adhère à la fois aux métaux et aux matières synthétiques, l'adhésif (4) présentant une température de transition vitreuse comprise entre 35°C et 70°C et un allongement à la rupture selon DIN ISO 527 de 40 à 52 %.

2. Mince carte à puce électronique selon la revendication 1, **caractérisée en ce que** toutes les adhérences entre les surfaces dans la carte à puce, à savoir entre la feuille de recouvrement (2) et la feuille d'âme (1), entre la surface du boîtier métallique et la feuille de recouvrement et entre le boîtier métallique et la feuille d'âme, sont réalisées par stratification à froid.

3. Mince carte à puce électronique selon les revendications 1 ou 2, **caractérisée en ce que** l'adhésif (4) est durci sous l'action de la lumière.

4. Mince carte à puce électronique selon l'une des revendications 1 à 3, **caractérisée en ce que** l'adhésif (4) est une résine époxy.

5. Mince carte à puce électronique selon l'une des revendications 1 à 3, **caractérisée en ce que** l'adhésif (4) est un matériau thermoplastique à base de polyuréthane.

6. Mince carte à puce électronique selon l'une des revendications 1 à 5, **caractérisée en ce que** la feuille de recouvrement (2) en matière synthétique est constituée de PVC.
